# EUROPÄISCHE PATENTSCHRIFT

(11) **EP 3 656 610 B1**
(45) Veröffentlichungstag und Bekanntmachung des Hinweises auf die Patenterteilung: **13.10.2021**
(21) Anmeldenummer: 19210755.5
(22) Anmeldetag: 21.11.2019
(51) Int. Cl.: B60R 9/10, B60R 13/10, B60R 9/06

(54) **HECKLASTENTRÄGER**
REAR LOAD CARRIER
SUPPORT DE CHARGEMENT À L'ARRIÈRE

(30) Priorität: 23.11.2018 DE 202018106668 U
(43) Veröffentlichungstag der Anmeldung: 27.05.2020
(73) Patentinhaber: Carman Enterprise Co., Ltd., Yuhang District Hangzhou Zhejiang 311121 (CN)
(72) Erfinder: Xianwei, Li, Hangzhou (CN)
(74) Vertreter: Paul & Albrecht Patentanwälte PartG mbB

(56) Entgegenhaltungen:
- EP-A1- 2 664 497
- DE-U1-202012 103 182

## Beschreibung

Die vorliegende Erfindung betrifft einen Hecklastenträger zur Montage an einem Kraftfahrzeug mit einem Basisteil, das an einer Vorderseite eine Anschlusseinrichtung zur Befestigung an einer fahrzeugseitigen Anhängerkupplung aufweist, zumindest einem ersten Tragteil und einem zweiten Tragteil, die an gegenüberliegenden Seiten des Basisteils befestigt und jeweils zwischen einer Lastaufnahmestellung, in der sich die Tragteile im Wesentlichen horizontal erstrecken, und einer Transportstellung schwenkbar um eine ihnen zugeordnete Tragteilschwenkachse gehalten sind, einem Befestigungsbügel, der im vorderen Bereich des Basisteils an dem Basisteil befestigt ist und aufwärts von diesem vorsteht, und einem an der Rückseite des Basisteils angeordneten, zur Aufnahme eines Nummernschilds ausgelegten Nummernschildhalter.

Hecklastenträger sind im Stand der Technik in unterschiedlichen Ausführungsformen bekannt und können insbesondere zum Transport von Fahrrädern ausgeführt sein. So beschreibt beispielsweise die DE 10 2008 006 814 A1 einen Hecklastenträger mit einem Basisteil, das als rechteckiger Rahmen ausgebildet ist, an dessen zum Kraftfahrzeug weisenden Vorderseite eine in den Figuren der Druckschrift nicht näher dargestellte Anschlusseinrichtung zur Befestigung an einer fahrzeugseitigen Anhängerkupplung vorgesehen ist. An gegenüberliegenden Seiten des Basisteils sind insgesamt vier paarweise einander gegenüber angeordnete Tragteile vorgesehen, die jeweils zwischen einer Lastaufnahmestellung, in der sie sich ausgehend von dem Basisteil horizontal auswärts erstrecken, und einer Transportstellung, in der sie horizontal einwärts von der entsprechenden Seite des Basisteils vorstehen, schwenkbar um eine ihnen zugeordnete Tragteilschwenkachse gehalten sind. Die Tragteile sind baugleich ausgeführt, weisen eine längliche Form auf und sind an ihrer in der Lastaufnahmestellung aufwärts weisenden Fläche mit einer Aufnahmenut zur Aufnahme jeweils eines Fahrradreifens versehen. An der zum Kraftfahrzeug weisenden Vorderseite des Basisteils ist ein Befestigungsbügel vorgesehen, der fest mit dem Basisteil verbunden ist und aufwärts von diesem vorsteht. An der dem Kraftfahrzeug abgewandten Rückseite des Basisteils ist an diesem ein zur Aufnahme eines Nummernschilds ausgelegter Nummernschildhalter befestigt. Ein wesentlicher Vorteil des in der DE 10 2008 006 814 A1 beschriebenen Hecklastenträgers besteht darin, dass dieser als faltbarer Hecklastenträger ausgeführt ist und sich im zusammengefalteten Zustand einfach transportieren und platzsparend verstauen lässt. Zur Herbeiführung des zusammengefalteten Zustands müssen die Tragteile aus ihrer Lastaufnahmestellung im Rahmen einer Schwenkbewegung um die Tragteilschwenkachsen in ihre Transportstellung überführt werden. Ferner muss der Befestigungsbügel demontiert werden. Letzterer kann alternativ auch als Schwenkbügel ausgeführt sein, so dass er ebenso wie die Tragteile auf das Basisteil geklappt werden kann.

Ein weiterer Hecklastenträger nach dem Oberbegriff des Anspruchs 1 ist in der Druckschrift EP 2 664 497 A1 beschrieben.

Ausgehend von diesem Stand der Technik ist es eine Aufgabe der vorliegenden Erfindung, einen Hecklastenträger der eingangs genannten Art mit alternativem Aufbau zu schaffen.

Zur Lösung dieser Aufgabe schafft die vorliegende Erfindung einen Hecklastenträger der eingangs genannten Art, wobei sich die Tragteile in der Transportstellung im Wesentlichen vertikal erstrecken, wobei ein Schwenkmechanismus vorgesehen ist, der dazu ausgelegt ist, den Nummernschildhalter schwenkend um eine Nummernschildhalterschwenkachse zwischen einer im Wesentlichen horizontalen Stellung und einer im Wesentlichen vertikalen Stellung zu bewegen, und wobei eine Arretiereinrichtung vorgesehen ist, die den Nummernschildhalter in seiner im Wesentlichen horizontalen Stellung lösbar arretiert, wobei die Arretiereinrichtung derart ausgebildet ist, dass diese Arretierung des Nummernschildhalters automatisch aufgehoben wird, wenn das erste Tragteil und/oder das zweite Tragteil aus seiner Lastaufnahmestellung in seine Transportstellung bewegt wird/werden. Der erfindungsgemäße Hecklastenträger zeichnet sich zum einen dadurch aus, dass der Befestigungsbügel unabhängig von der Stellung der Tragteile und des Nummernschildhalters stets an Ort und Stelle verbleibt, weshalb dieser weder abnehmbar noch schwenkbar ausgeführt werden muss. Dies führt zu einem sehr einfachen, kompakten und preiswerten Aufbau des Hecklastenträgers. Zum anderen nimmt der Hecklastenträger im zusammengefalteten Zustand, in dem sich die Tragteile in ihrer Transportstellung und der Nummernschildhalter in seiner im Wesentlichen vertikalen Stellung befinden, sehr wenig Raum ein, so dass er sich gut verstauen lässt. Zudem lässt sich der erfindungsgemäße Hecklastenträger sowohl im ausgeklappten als auch im zusammengeklappten Zustand sehr bequem handhaben. Ein weiterer wesentlicher Vorteil besteht darin, dass der Nummernschildhalter einem Überführen der Tragteile aus der Lastaufnahmestellung in die Transportstellung nicht blockierend im Wege steht, da die Arretierung, die ihn in seiner horizontalen Stellung hält, im Rahmen der Bewegung der Tragteile automatisch aufgehoben wird, so dass der Nummernschildhalter um seine Nummernschildhalterschwenkachse schwenken kann. Entsprechend können keinerlei schädliche Momente und/oder Kräfte auf den Schwenkmechanismus, die Arretiereinrichtung und den Nummernschildhalter ausgeübt werden. Darüber hinaus wird die Handhabung beim Zusammenklappen des Hecklastenträgers vereinfacht.

Gemäß einer Ausgestaltung der vorliegenden Erfindung weist der Schwenkmechanismus ein die Nummernschildhalterschwenkachse definierendes, bevorzugt stiftartig ausgebildetes Verbindungselement auf, über das der Nummernschildhalter mit dem ersten Tragteil verbunden ist. Entsprechend lässt sich der Nummernschildhalter relativ zum ersten Tragteil um die Nummernschildhalterschwenkachse schwenken.

Bevorzugt ist das Verbindungselement an einem aufwärts von dem ersten Tragteil vorstehenden, fest mit diesem verbundenen und insbesondere als gezogenes Aluminiumteil bereitgestellten Befestigungsarm befestigt. Die Befestigung des Verbindungselementes an einem solchen Befestigungsarm bietet die Möglichkeit, die Position der Nummernschildhalterschwenkachse relativ zum Basisteil, zum ersten Tragteil und zur Nummernschildhalterung derart zu wählen, dass der Nummernschildhalter unabhängig von seiner eigenen Endstellung und der Endstellung der Tragelemente niemals abwärts von dem Basisteil oder den Tragteilen vorsteht. Entsprechend kann der Hecklastenträger stets auf einen Untergrund aufgesetzt werden, ohne dass die Gefahr einer Beschädigung des Nummernschildhalters besteht.

Gemäß einer Ausgestaltung der vorliegenden Erfindung steht von der zur Anschlusseinrichtung weisenden Seite des Nummernschildhalters ein stiftförmiger Anschlag vor und ist seitlich an dem Befestigungsarm eine Anschlagaufnahmeöffnung vorgesehen, wobei der Anschlag und die Anschlagaufnahmeöffnung derart positioniert und ausgebildet sind, dass der Anschlag beim Überführen des Nummernschildhalters aus der im Wesentlichen horizontalen in die im Wesentlichen vertikale Stellung in die Anschlagaufnahmeöffnung eingeführt und bei Erreichen der im Wesentlichen vertikalen Stellung an einer Wandung der Anschlagaufnahmeöffnung anschlägt. Auf diese Weise wird sichergestellt, dass der Nummernschildhalter nicht über seine im Wesentlichen vertikale Stellung hinaus bewegt werden kann.

Erfindungsgemäß umfasst die Arretiereinrichtung eine aufwärts von dem zweiten Tragteil vorstehende, fest mit diesem verbundene und insbesondere als gezogenes Aluminiumteil bereitgestellte erste Arretiereinheit, die ein insbesondere hakenartig ausgebildetes erstes Arretierelement aufweist, das eine in Richtung des freien Endes des zweiten Tragteils geöffnete Rastöffnung definiert, und eine an der zum Basisteil weisenden Seite des Nummernschildhalters angeordnete zweite Arretiereinheit, die ein zweites, nach Art eines in die Rastöffnung einführbaren Vorsprungs ausgebildetes zweites Arretierelement definiert, das zwischen einer Arretierstellung, in der es mit dem ersten Arretierelement in Eingriff ist, und einer Freigabestellung, in der es mit dem ersten Arretierelement nicht in Eingriff ist, hin und her bewegbar ist. Eine derartige Anordnung führt zu einem einfachen und leicht zu handhabenden Aufbau der Arretiereinrichtung.

Vorteilhaft ist das zweite Arretierelement in Richtung der Arretierstellung unter Verwendung einer Feder vorgespannt, wodurch die Handhabung erleichtert wird.

Gemäß einer Ausgestaltung der vorliegenden Erfindung definiert das erste Arretierelement eine Führungsfläche, die derart positioniert und ausgebildet ist, dass das zweite Arretierelement bei der Überführung des Nummernschildhalters aus der im Wesentlichen vertikalen Stellung in die im Wesentlichen horizontale Stellung entlang der Führungsfläche geführt in seine Freigabestellung und am Ende der Führungsfläche aufgrund der Vorspannung in seine Arretierstellung innerhalb der Rastöffnung des ersten Arretierelementes bewegt wird. Entsprechend muss die Arretiereinrichtung beim Überführen des Nummernschildhalters aus der im Wesentlichen vertikalen Stellung in die im Wesentlichen horizontale Stellung nicht manuell betätigt werden. Lediglich zur Überführung des Nummernschildhalters aus der im Wesentlichen horizontalen Stellung in die im Wesentlichen vertikale Stellung ist eine Manipulation der Arretiereinrichtung erforderlich.

Gemäß einer Ausgestaltung der vorliegenden Erfindung sind an der Rückseite der Tragteile Rücklampen befestigt, die derart von den Tragteilen und dem Nummernschildhalter vorstehend angeordnet sind, dass der Nummernschildhalter, wenn sich dieser in seiner im Wesentlichen vertikalen Stellung und die Tragteile in ihrer Transportstellung befinden, in einem Aufnahmeraum zwischen den Rückleuchten und der Anschlusseinrichtung aufgenommen ist. Dieser Aufbau ist dahingehend von Vorteil, dass eine Sicherung des Nummernschildhalters in seiner im Wesentlichen vertikalen Stellung nicht erforderlich ist, da der Nummernschildhalter dann zwischen den gegenüberliegenden Tragteilen gehalten ist. Darüber hinaus wird der Nummernschildhalter in der zusammengeklappten Stellung des Hecklastenträgers zumindest teilweise von den Rücklampen bedeckt und entsprechend geschützt.

Vorteilhaft sind die Tragteile in ihren auswärts weisenden Endbereichen jeweils mit zumindest einem Traggriff versehen, wobei die Traggriffe insbesondere derart ausgebildet und positioniert sind, dass sie in der Transportstellung der Tragteile mit einer einzelnen Hand gemeinsam gegriffen werden können.

Weitere Merkmale und Vorteile der vorliegenden Erfindung werden anhand der nachfolgenden Beschreibung eines Hecklastenträgers gemäß einer Ausführungsform der vorliegenden Erfindung unter Bezugnahme auf die beiliegende Zeichnung deutlich. Darin ist
Figur 1 eine perspektivische Vorderansicht eines auseinandergefalteten Hecklastenträgers gemäß einer Ausführungsform der vorliegenden Erfindung;
Figur 2 eine weitere perspektivische Vorderansicht des in Figur 1 dargestellten Hecklastenträgers, wobei ein Befestigungsbügel nur teilweise dargestellt ist;
Figur 3 eine geschnittene Vorderansicht der in Figur 2 dargestellten Anordnung;
Figur 4 eine perspektivische Rückansicht des in Figur 1 dargestellten Hecklastenträgers in einem zusammengefalteten Zustand;
Figur 5 eine perspektivische Ansicht, die einen Nummernschildhalter, einen Schwenkmechanismus und eine Arretiereinrichtung des in Figur 1 dargestellten Hecklastenträgers zeigt;
Figur 6 eine teilweise geschnittene Ansicht der in Figur 5 dargestellten Anordnung;
Figur 7 eine Ansicht der in Figur 6 dargestellten Anordnung, wobei der Nummernschildhalter aus seiner im Wesentlichen horizontalen Stellung aufwärts geschwenkt und aus dem Eingriff mit der Arretiereinrichtung gebracht wurde;
Figur 8 eine Ansicht einer Haltestrebe, die zur Befestigung des Schwenkmechanismus, des Nummernschildhalters sowie des zweiten Arretierelementes der Arretiereinrichtung dient, wobei das zweite Arretierelement geschnitten dargestellt ist; und
Figur 9 eine perspektivische Ansicht der Haltestrebe ohne das zweite Arretierelement.

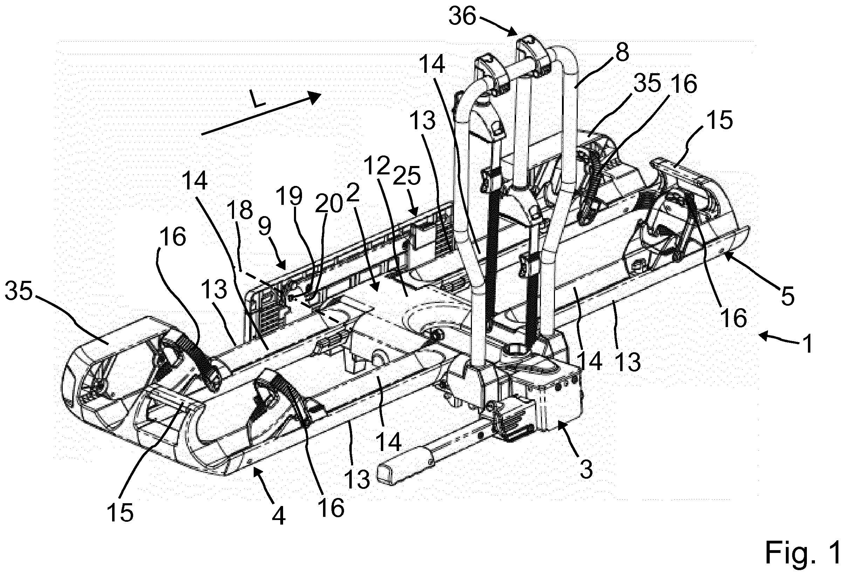

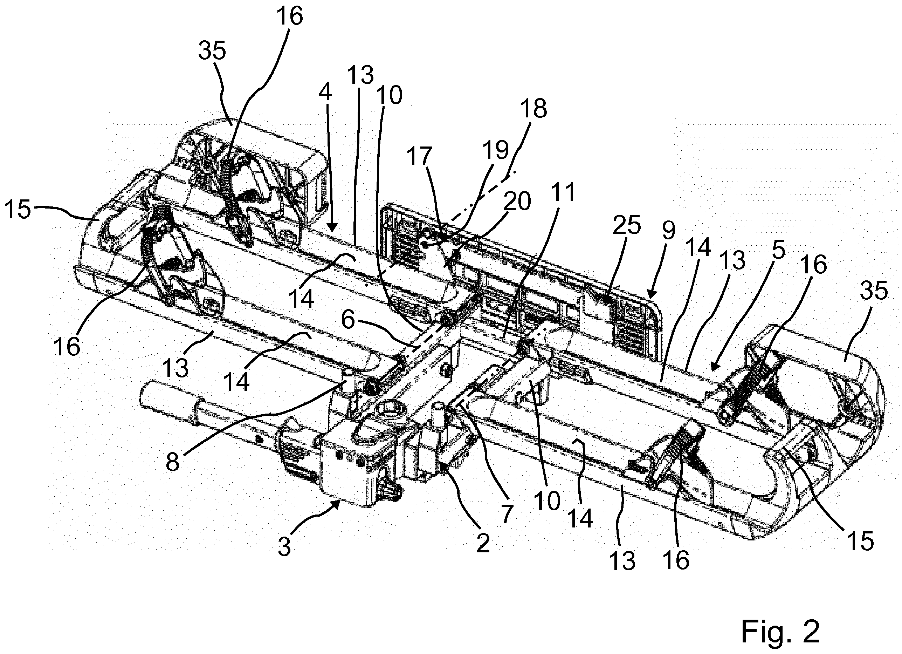

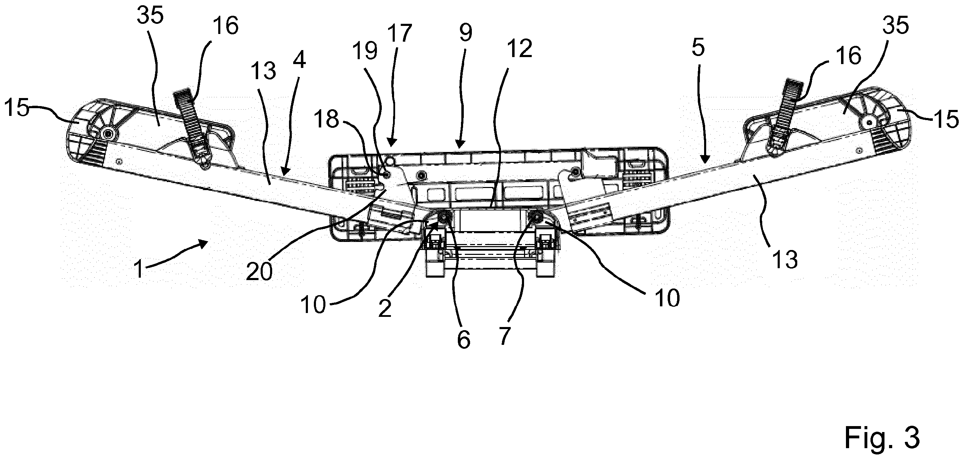

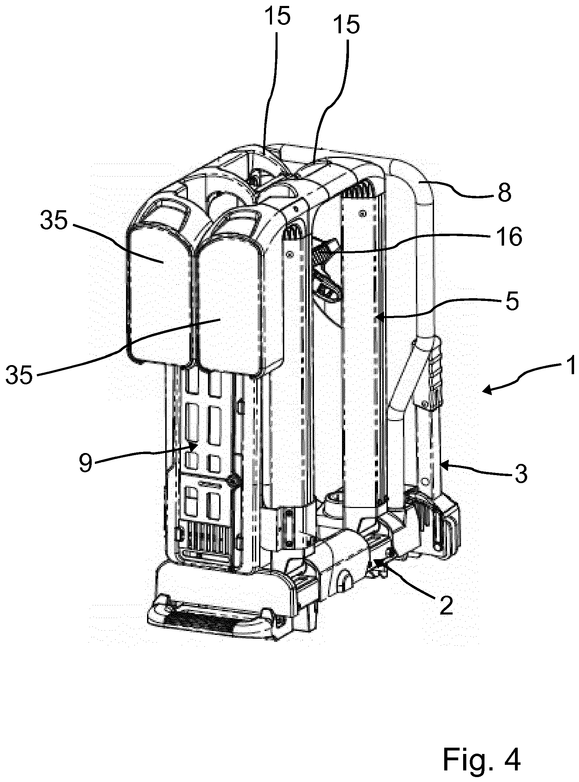

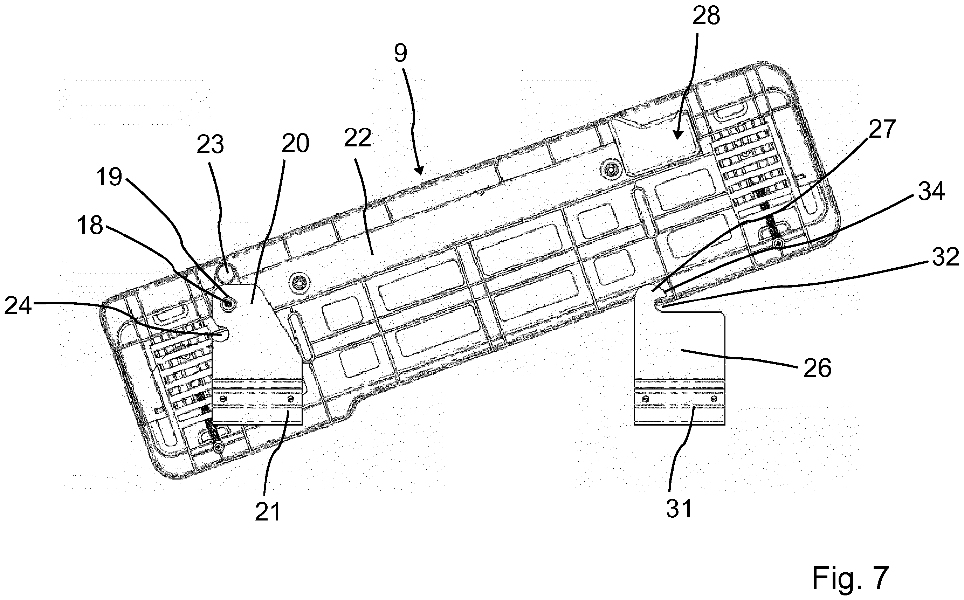

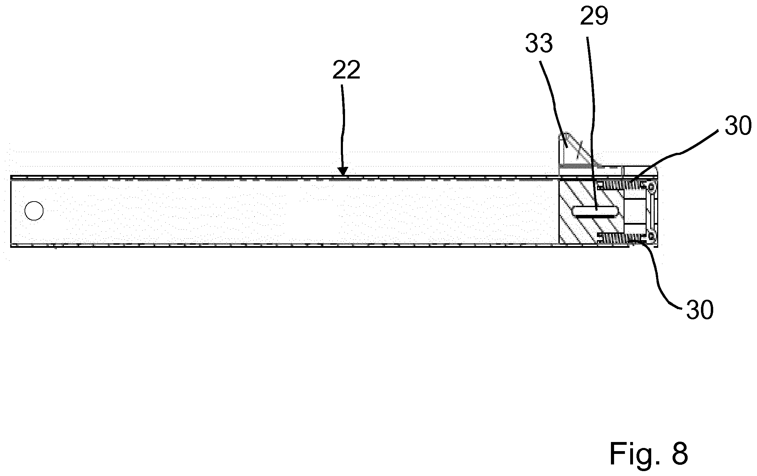

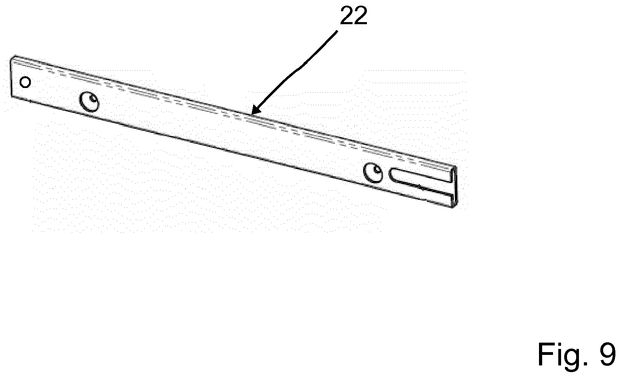

Die Figuren 1 bis 9 zeigen eine Ausführungsform eines erfindungsgemäßen Hecklastenträgers 1 bzw. Komponenten desselben. Der Hecklastenträger 1, der vorliegend zur Aufnahme von zwei Fahrrädern ausgebildet ist, umfasst als Hauptkomponenten ein Basisteil 2, das an einer Vorderseite eine Anschlusseinrichtung 3 zur Befestigung an einer fahrzeugseitigen Anhängerkupplung aufweist, ein erstes Tragteil 4 und ein zweites Tragteil 5, die an gegenüberliegenden Seiten des Basisteils 2 befestigt und jeweils zwischen einer in den Figuren 1 und 2 dargestellten Lastaufnahmestellung, in der sich die Tragteile 4 und 5 im Wesentlichen horizontal erstrecken, und einer in Figur 4 gezeigten Transportstellung, in der sich die Tragteile 4 und 5 im Wesentlichen vertikal erstrecken, schwenkbar um eine ihnen zugeordnete Tragteilschwenkachse 6 bzw. 7 gehalten sind, einen Befestigungsbügel 8, der im vorderen Bereich des Basisteils 2 starr mit dem Basisteil 2 verbunden ist und aufwärts von diesem vorsteht, und einen an der Rückseite des Basisteils 2 angeordneten, zur Aufnahme eines nicht näher dargestellten Nummernschilds ausgelegten Nummernschildhalter 9.

Das Basisteil 2 ist vorliegend rahmenartig ausgebildet und umfasst zwei parallel zueinander angeordnete, hohl ausgebildete Streben 10, die rückseitig über eine ebenfalls hohl ausgebildete Verbindungsstrebe 11 fest miteinander verbunden sind. Die vorderen Endbereiche der Hauptstreben 10 nehmen die Anschlusseinrichtung 3 zwischen sich auf und sind fest mit dieser verbunden. Auf diese Weise wird ein sehr robuster Aufbau des Basisteils 2 geschaffen. Ferner umfasst das Basisteil 2 eine Abdeckung 12, welche die Hauptstreben 10 und die Verbindungsstrebe 11 abdeckt.

Die Tragteile 4 und 5 sind im Wesentlichen baugleich ausgeführt. Jedes Tragteil 4, 5 weist zwei parallel zueinander angeordnete Tragschienen 13 auf, die an ihrer in der Lastaufnahmestellung aufwärts weisenden Fläche mit einer Aufnahmenut 14 zur Aufnahme jeweils eines Fahrradreifens versehen sind. Ein freies Ende jeder Tragschiene 13 ist an dem Basisteil 2 schwenkbar um die zugehörige Tragteilschwenkachse 6, 7 gehalten. Die anderen beiden freien Enden der Tragschienen 13 eines Tragteils 4, 5 sind über einen Traggriff 15 fest miteinander verbunden, der in der Lastaufnahmestellung aufwärts vorsteht und leicht in Richtung des Basisteils 2 gebogen ist. An jeder Tragschiene 13 ist ein Halteriementeil 16 schwenkbar befestigt, mit dem ein von der Tragschiene 13 aufgenommener Reifen eines am Hecklastenträger angeordneten Fahrrads an der Tragschiene 13 befestigt werden kann.

Der Nummernschildhalter 9 ist über einen Schwenkmechanismus 17 an dem ersten Tragteil 4 befestigt. Der Schwenkmechanismus 17 ist dazu ausgelegt, den Nummernschildhalter 9 schwenkend um eine Nummernschildhalterschwenkachse 18 zwischen einer in den Figuren 1 und 2 gezeigten im Wesentlichen horizontalen Stellung und einer in Figur 4 dargestellten im Wesentlichen vertikalen Stellung zu bewegen. Der Schwenkmechanismus 17 umfasst ein die Nummernschildhalterschwenkachse 18 definierendes, vorliegend stiftartig ausgebildetes Verbindungselement 19 und einen aufwärts von dem ersten Tragteil 4 vorstehenden, fest mit diesem in einem Bereich nahe des Basisteils 2 verbundenen und vorliegend als gezogenes Aluminiumteil bereitgestellten Befestigungsarm 20, an dem ein Ende des Verbindungselementes 19 im oberen Bereich gehalten ist. Zur Befestigung an dem ersten Tragteil 4 weist der Befestigungsarm 20 einen unteren, hakenartig gebogenen Befestigungsbereich 21 auf, der die hintere Tragschiene 13 des ersten Tragteils 4 von unten umgreift und mit dieser verschraubt ist. Das andere Ende des Verbindungselementes 19 ist an einer länglichen, sich in Längsrichtung L des Nummernschildhalters 9 erstreckenden, hohl ausgebildeten Haltestrebe 22 befestigt, die im oberen Bereich der zur Anschlusseinrichtung 3 weisenden Seite des Nummernschildhalters 9 angeordnet und mit dem Nummernschildhalter 9 verschraubt ist. Von der zur Anschlusseinrichtung 3 weisenden Seite des Nummernschildhalters 9 steht oberhalb des Befestigungsarms 20 ein stiftförmiger Anschlag 23 vor, der beim Überführen des Nummernschildhalters 9 aus der im Wesentlichen horizontalen in die im Wesentlichen vertikale Stellung in eine seitlich an dem Befestigungsarm 20 vorgesehene Anschlagaufnahmeöffnung 24 eingeführt und bei Erreichen der im Wesentlichen vertikalen Stellung an einer Wandung der Anschlagaufnahmeöffnung 24 anschlägt.

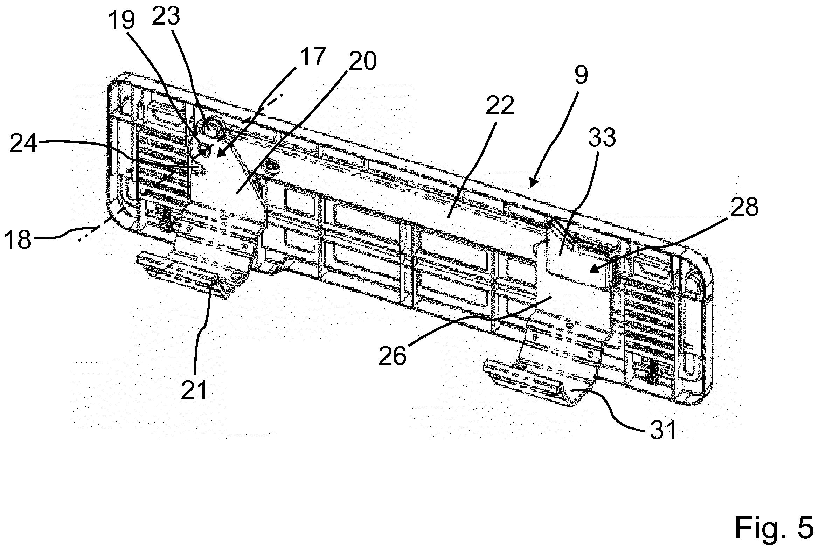

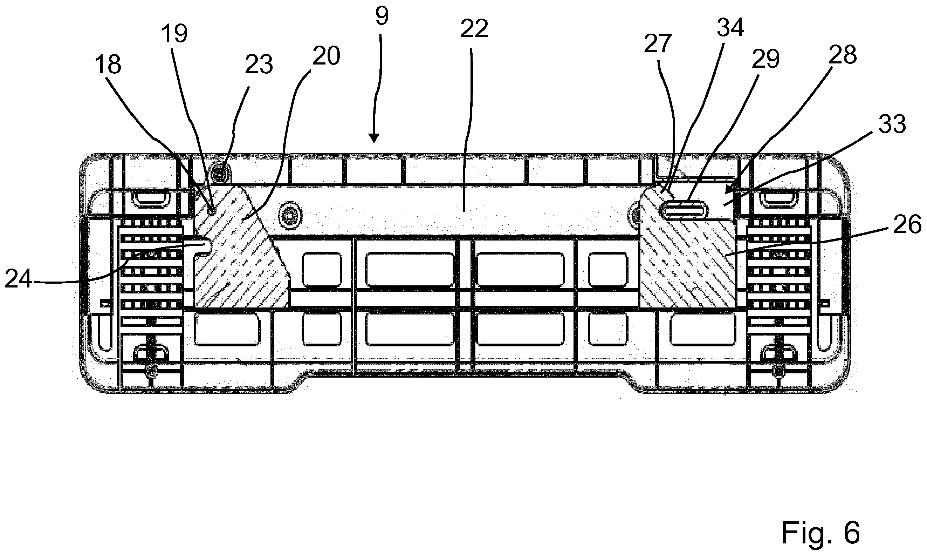

Ferner ist eine Arretiereinrichtung 25 vorgesehen, die den Nummernschildhalter 9 in seiner im Wesentlichen horizontalen Stellung lösbar arretiert. Die Arretiereinrichtung 25 umfasst eine aufwärts von dem zweiten Tragteil 5 vorstehende, fest mit diesem in einem Bereich benachbart zum Basisteil 2 verbundene erste Arretiereinheit 26, die ein erstes Arretierelement 27 definiert, und eine an der zum Basisteil 2 weisenden Seite des Nummernschildhalters 9 angeordnete zweite Arretiereinheit 28, die ein zweites Arretierelement 29 definiert, das zwischen einer Arretierstellung, in der es mit dem ersten Arretierelement 27 in Eingriff ist, und einer Freigabestellung, in der es mit dem ersten Arretierelement 27 nicht in Eingriff ist, hin und her bewegbar und in Richtung der Arretierstellung unter Verwendung von Federn 30 vorgespannt ist. Die erste Arretiereinheit 26 ist vorliegend ähnlich wie der Befestigungsarm 20 als gezogenes Aluminiumteil hergestellt und umfasst einen unteren, hakenartig gebogenen Befestigungsbereich 31, der die hintere Tragschiene 13 des zweiten Tragteils 5 von unten umfasst und mit dieser verschraubt ist. Das erste Arretierelement 27 steht aufwärts vor und weist die Form eines Hakens mit einer zum freien Ende des zweiten Tragteils 5 geöffneten Rastöffnung 32 auf. Die an dem Nummernschildhalter 9 befestigte zweite Arretiereinheit 28 umfasst ein an der Haltestrebe 22 fixiertes Gehäuse 33, das an der zum Schwenkmechanismus 17 weisenden Stirnseite und an seiner Unterseite offen ausgeführt ist, wie es anhand einer Zusammenschau der Figuren 5 und 6 zu erkennen ist. Innerhalb des Gehäuses 33 ist das zweite Arretierelement 29 aufgenommen, das an der Haltestrebe 22 geführt ist und vorliegend nach Art eines in die Rastöffnung 32 des ersten Arretierelementes 27 einführbaren Vorsprungs ausgebildet ist, der über die Federn 30 in Richtung der Rastöffnung 32 gedrückt wird. Im oberen Bereich des ersten Arretierelementes ist ferner eine Führungsfläche 34 definiert, die derart positioniert und ausgebildet ist, dass das zweite Arretierelement 29 bei der Überführung des Nummernschildhalters 9 aus der im Wesentlichen vertikalen Stellung in die im Wesentlichen horizontale Stellung entlang der Führungsfläche 34 geführt in seine Freigabestellung und am Ende der Führungsfläche 34 aufgrund der Vorspannung der Federn 30 in seine Arretierstellung innerhalb der Rastöffnung 32 des ersten Arretierelementes 27 bewegt wird. Zum Überführen des Nummernschildhalters 9 aus der im Wesentlichen horizontalen Stellung in die im Wesentlichen vertikale Stellung muss das zweite Arretierelement 29 entgegen der Kraft der Federn 30 zur Seite bewegt werden, um dieses aus dem Eingriff mit dem ersten Arretierelement 27 zu bringen. Dies kann vorliegend erfolgen, indem das Tragteil 4 und/oder das Tragteil 5 um die zugehörige Tragteilschwenkachse 6, 7 in Richtung der Transportstellung geschwenkt wird, da eine solche Bewegung Dank der zuvor beschriebenen Ausbildung und Anordnung der Arretiereinrichtung 25 automatisch dazu führt, dass das zweite Arretierelement 29 aus dem Eingriff mit dem ersten Arretierelement 27 gebracht wird. Eine gesonderte manuelle Bewegung des zweiten Arretierelementes 29 vor dem Zusammenfalten der Tragteile 4 und 5 ist somit nicht erforderlich, was zum einen die Handhabung erleichtert und zum anderen den Schwenkmechanismus 17, die Arretiereinrichtung 25 und den Nummernschildhalter 9 vor Beschädigungen schützt, da ein Lösen der Arretierung nicht mehr vergessen werden kann. Nach dem Lösen des Eingriffs können der Nummernschildhalter 9 um die Nummernschildhalterschwenkachse 18 und die Tragteile 4 und 5 um ihre Tragteilschwenkachsen 6, 7 in ihre jeweils vertikalen Stellungen überführt werden, bis der Anschlag 23 an der Wandung der Anschlagaufnahmeöffnung 24 anschlägt.

An der Rückseite der Tragteile 4 und 5 sind Rücklampen 35 befestigt, die derart von den Tragteilen 4 und 5 und der Nummernschildhalterung 9 vorstehend angeordnet sind, dass der Nummernschildhalter 9, wenn sich dieser in seiner im Wesentlichen vertikalen Stellung und die Tragteile 4 und 5 in ihrer Transportstellung befinden, in einem Aufnahmeraum zwischen den Rückleuchten 35 und der Anschlusseinrichtung 3 aufgenommen ist, wie es in Figur 4 gezeigt ist.

Der Befestigungsbügel 8 ist im Wesentlichen U-förmig ausgebildet und an seinen freien Enden starr mit dem Basisteil 2 verbunden. Im oberen Bereich des Befestigungsbügels 8 sind Fixiereinheiten 36 befestigt, mit denen auf dem Hecklastenträger 1 angeordnete Fahrräder fixiert und gesichert werden können.

Abschließend sei darauf hingewiesen, dass die im Rahmen der vorliegenden Offenbarung verwendeten Wortlaute "im Wesentlichen horizontal" und "im Wesentlichen vertikal" Stellungen ± 15° abweichend von der Horizontalen oder der Vertikalen beinhalten.

### Bezugszeichenliste

- 1: Hecklastenträger
- 2: Basisteil
- 3: Anschlusseinrichtung
- 4: Tragteil
- 5: Tragteil
- 6: Tragteilschwenkachse
- 7: Tragteilschwenkachse
- 8: Befestigungsbügel
- 9: Nummernschildhalter
- 10: Hauptstreben
- 11: Verbindungsstrebe
- 12: Abdeckung
- 13: Tragschiene
- 14: Aufnahmenut
- 15: Traggriff
- 16: Halteriementeil
- 17: Schwenkmechanismus
- 18: Nummernschildhalterschwenkachse
- 19: Verbindungselement
- 20: Befestigungsarm
- 21: Befestigungsbereich
- 22: Haltestrebe
- 23: Anschlag
- 24: Anschlagaufnahmeöffnung
- 25: Arretiereinrichtung
- 26: erste Arretiereinheit
- 27: erstes Arretierelement
- 28: zweite Arretiereinheit
- 29: zweites Arretierelement
- 30: Feder
- 31: Befestigungsbereich
- 32: Rastöffnung
- 33: Gehäuse
- 34: Führungsfläche
- 35: Rücklampe
- 36: Fixiereinheit
- L: Längsrichtung

## Patentansprüche

1. Hecklastenträger (1) zur Montage an einem Kraftfahrzeug mit einem Basisteil (2), das an einer Vorderseite eine Anschlusseinrichtung (3) zur Befestigung an einer fahrzeugseitigen Anhängerkupplung aufweist, zumindest einem ersten Tragteil (4) und einem zweiten Tragteil (5), die an gegenüberliegenden Seiten des Basisteils (2) befestigt und jeweils zwischen einer Lastaufnahmestellung, in der sich die Tragteile (4, 5) im Wesentlichen horizontal erstrecken, und einer Transportstellung schwenkbar um eine ihnen zugeordnete Tragteilschwenkachse (6, 7) gehalten sind, einem Befestigungsbügel (8), der im vorderen Bereich des Basisteils (2) an dem Basisteil (2) befestigt ist und aufwärts von diesem vorsteht, und einem an der Rückseite des Basisteils (2) angeordneten, zur Aufnahme eines Nummernschilds ausgelegten Nummernschildhalter (9), wobei sich die Tragteile (4, 5) in der Transportstellung im Wesentlichen vertikal erstrecken, wobei ein Schwenkmechanismus (17) vorgesehen ist, der dazu ausgelegt ist, den Nummernschildhalter (9) schwenkend um eine Nummernschildhalterschwenkachse (18) zwischen einer im Wesentlichen horizontalen Stellung und einer im Wesentlichen vertikalen Stellung zu bewegen, und wobei eine Arretiereinrichtung (25) vorgesehen ist, die den Nummernschildhalter (9) in seiner im Wesentlichen horizontalen Stellung lösbar arretiert, wobei die Arretiereinrichtung (25) derart ausgebildet ist, dass diese Arretierung des Nummernschildhalters (9) automatisch aufgehoben wird, wenn das erste Tragteil (4) und/oder das zweite Tragteil (5) aus seiner Lastaufnahmestellung in seine Transportstellung bewegt wird/werden, **dadurch gekennzeichnet, dass** die Arretiereinrichtung (25) eine aufwärts von dem zweiten Tragteil (5) vorstehende, fest mit diesem verbundene erste Arretiereinheit (26), die ein erstes Arretierelement (27) aufweist, das eine in Richtung des freien Endes des zweiten Tragteils (5) geöffnete Rastöffnung (32) definiert, und eine an der zum Basisteil (2) weisenden Seite des Nummernschildhalters (9) angeordnete zweite Arretiereinheit (28) umfasst, die ein zweites, nach Art eines in die Rastöffnung (32) einführbaren Vorsprungs ausgebildetes zweites Arretierelement (29) definiert, das zwischen einer Arretierstellung, in der es mit dem ersten Arretierelement (27) in Eingriff ist, und einer Freigabestellung, in der es mit dem ersten Arretierelement nicht in Eingriff ist, hin und her bewegbar ist.

2. Hecklastenträger (1) nach Anspruch 1, **dadurch gekennzeichnet, dass** der Schwenkmechanismus (17) ein die Nummernschildhalterschwenkachse (18) definierendes, bevorzugt stiftartig ausgebildetes Verbindungselement (19) aufweist, über das der Nummernschildhalter (9) mit dem ersten Tragteil (4) verbunden ist.

3. Hecklastenträger (1) nach Anspruch 2, **dadurch gekennzeichnet, dass** das Verbindungselement (19) an einem aufwärts von dem ersten Tragteil (4) vorstehenden, fest mit diesem verbundenen und insbesondere als gezogenes Aluminiumteil bereitgestellten Befestigungsarm (20) befestigt ist.

4. Hecklastenträger (1) nach Anspruch 3, **dadurch gekennzeichnet, dass** von der zur Anschlusseinrichtung (3) weisenden Seite des Nummernschildhalters (9) ein stiftförmiger Anschlag (23) vorsteht und seitlich an dem Befestigungsarm (20) eine Anschlagaufnahmeöffnung (24) vorgesehen ist, wobei der Anschlag (23) und die Anschlagaufnahmeöffnung (24) derart positioniert und ausgebildet sind, dass der Anschlag (23) beim Überführen des Nummernschildhalters (9) aus der im Wesentlichen horizontalen in die im Wesentlichen vertikale Stellung in die Anschlagaufnahmeöffnung (24) eingeführt und bei Erreichen der im Wesentlichen vertikalen Stellung an einer Wandung der Anschlagaufnahmeöffnung (24) anschlägt.

5. Hecklastenträger (1) nach einem der vorhergehenden Ansprüche, **dadurch gekennzeichnet, dass** die erste Arretiereinheit (26) als gezogenes Aluminiumteil bereitgestellt ist.

6. Hecklastenträger (1) nach einem der vorhergehenden Ansprüche, **dadurch gekennzeichnet, dass** das erste Arretierelement (27) hakenartig ausgebildet ist.

7. Hecklastenträger (1) nach einem der vorherigen Ansprüche, **dadurch gekennzeichnet, dass** das zweite Arretierelement (29) in Richtung der Arretierstellung unter Verwendung einer Feder (30) vorgespannt ist.

8. Hecklastenträger (1) nach Anspruch 7, **dadurch gekennzeichnet, dass** das erste Arretierelement (27) eine Führungsfläche (34) definiert, die derart positioniert und ausgebildet ist, dass das zweite Arretierelement (29) bei der Überführung des Nummernschildhalters (9) aus der im Wesentlichen vertikalen Stellung in die im Wesentlichen horizontale Stellung entlang der Führungsfläche (34) geführt in seine Freigabestellung und am Ende der Führungsfläche aufgrund der Vorspannung in seine Arretierstellung innerhalb der Rastöffnung (32) des ersten Arretierelementes (27) bewegt wird.

9. Hecklastenträger (1) nach einem der vorhergehenden Ansprüche, **dadurch gekennzeichnet, dass** an der Rückseite der Tragteile (4, 5) Rücklampen (35) befestigt sind, die derart von den Tragteilen (4, 5) und dem Nummernschildhalter (9) vorstehend angeordnet sind, dass der Nummernschildhalter (9), wenn sich dieser in seiner im Wesentlichen vertikalen Stellung und die Tragteile (4, 5) in ihrer Transportstellung befinden, in einem Aufnahmeraum zwischen den Rückleuchten (35) und der Anschlusseinrichtung (3) aufgenommen ist.

10. Hecklastenträger (1) nach einem der vorhergehenden Ansprüche, **dadurch gekennzeichnet, dass** die Tragteile (4, 5) in ihren auswärts weisenden Endbereichen jeweils mit zumindest einem Traggriff (15) versehen sind, wobei die Traggriffe (15) insbesondere derart ausgebildet und positioniert sind, dass sie in der Transportstellung der Tragteile (4, 5) mit einer Hand gemeinsam gegriffen werden können.

## Claims

1. Rear load carrier (1) for mounting to a motor vehicle, comprising a base part (2) having a connecting device (3) on the front side for attachment to a vehicle-side trailer coupling, at least a first support part (4) and a second support part (5), which are fastened to opposite sides of the base part (2) and are each held pivotably about a support part pivot axis (6 , 7) assigned to them between a load bearing position, in which the support parts (4, 5) extend essentially horizontally, and a transport position, an attachment bracket (8) which is fastened to the base part (2) in the front region of the base part (2) and projects upwards from the latter, and a license plate holder (9) which is arranged on the rear side of the base part (2) and is designed to receive a license plate, the support parts (4, 5) extending substantially vertically in the transport position, wherein a pivot mechanism (17) is provided which is adapted to pivotably move the license plate holder (9) about a license plate holder pivot axis (18) between a substantially horizontal position and a substantially vertical position and wherein a locking device (25) is provided for releasably locking the license plate holder (9) in its substantially horizontal position, the locking device (25) being configured such that the locking of the license plate holder (9) is automatically released, when the first support part (4) and/or the second support part (3) is/are moved from its load bearing position into its transport position, **characterized in that** the locking device (25) comprises a first locking unit (26), which projects upwards from the second support part (5) and is fixedly connected to the latter, which first locking unit (26) has a first locking element (27) defining a latching opening (32) opened in the direction of the free end of the second support part (5), and a second locking unit (28) arranged on the side of the license palate holder (9) facing towards the base part (2), which second locking unit (28) defines a second locking element (29) which is designed in the manner of a projection which can be inserted into the latching opening (32) and can be moved back and forwards between a locking position, in which it is in engagement with the first locking element (27), and a release position, in which it is not in engagement with the first locking element.

2. Rear load carrier (1) according to claim 1, **characterized in that** the pivot mechanism (17) comprises a connecting element (19), which defines the license plate holder pivot axis (18) and is preferably of a pin-like design and via which the license plate holder (9) is connected to the first support part.

3. Rear load carrier (1) according to claim 2, **characterized in that** the connecting element (19) is fastened to a fastening arm (20), which projects upwards from the first support part (4), is firmly connected to the latter and is provided in particular as a drawn aluminum part.

4. Rear load carrier (1) according to claim 3, **characterized in that** a pin-shaped stop (23) projects from the side of the license plate holder (9) facing the connecting device (3) and a stop receiving opening (24) is provided laterally on the fastening arm (20), the stop (23) and the stop receiving opening (24) being positioned and designed in such a way that the stop (23) is inserted into the stop receiving opening (24) when the license plate holder (9) is transferred from the substantially horizontal to the substantially vertical position and strikes against a wall of the stop receiving opening (24), when the substantially vertical position is reached.

5. Rear load carrier (1) according to any of the preceding claims, **characterized in that** the first locking unit (26) is provided as a drawn aluminum part.

6. Rear load carrier (1) according to any of the preceding claims, **characterized in that** the first locking element (27) is of a hook-like design.

7. Rear load carrier (1) according to any of the preceding claims, **characterized in that** the second locking element (29) is biased in the direction of the locking position using a spring (30).

8. Rear load carrier (1) according to claim 7, **characterized in that** the first locking element (27) defines a guide surface (34) which is positioned and formed in such a way that the second locking element (29), when the license plate holder (9) is transferred from the substantially vertical position to the substantially horizontal position, is guided along the guide surface (34) into its release position and, at the end of the guide surface, is moved into its locking position with the latching opening (32) of the first locking element (27) due to the bias.

9. Rear load carrier (1) according to any of the preceding claims, **characterized in that** rear lights (35) are fastened to the rear side of the support parts (4, 5) which rear lights (35) are arranged projecting from the support parts (4, 5) and the license plate holder (9) in such a way that the license plate holder (9), when the license plate holder (9) is in its substantially vertical position and the support parts (4, 5) are in the transport position, is received in a receiving space between the rear lights (35) and the connecting device (3).

10. Rear load carrier (1) according to any of the preceding claims, **characterized in that** the support parts (4, 5) are each provided with at least one carrying handle (15) in their outwardly facing end regions, the carrying handles (15) being designed and positioned in particular in such a way that they can be gripped together with one hand in the transport position of the support parts (4, 5).

## Revendications

1. Porte-charge arrière (1) destiné à être monté sur un véhicule à moteur, comprenant une pièce de base (2) ayant sur un côté avant un dispositif de connexion (3) pour la fixation à un accouplement de remorque côté véhicule, au moins une première pièce de support (4) et une seconde pièce de support (5), qui sont fixées sur des côtés opposés de la pièce de base (2) et sont maintenues chacune de manière à pouvoir pivoter autour d'un axe de pivotement de pièce de support (6, 7) qui leur est attribué entre une position de réception de charge, dans laquelle les pièces de support (4, 5) s'étendent essentiellement à l'horizontale, et une position de transport, un étrier de fixation (8) qui est fixé à la pièce de base (2) dans la zone avant de la pièce de base (2) et fait saillie vers le haut à partir de celle-ci, et un support de plaque d'immatriculation (9) qui est disposé sur le côté arrière de la pièce de base (2) et est conçu pour recevoir une plaque d'immatriculation, les pièces de support (4, 5) s'étendant sensiblement verticalement dans la position de transport, un mécanisme de pivotement (17) étant prévu qui est adapté pour déplacer de manière pivotante le support de plaque d'immatriculation (9) autour d'un axe de pivotement de support de plaque d'immatriculation (18) entre une position sensiblement horizontale et une position sensiblement verticale, et un dispositif de verrouillage (25) étant prévu qui verrouille de manière amovible le support de plaque d'immatriculation (9) dans sa position sensiblement horizontale, le dispositif de verrouillage (25) étant conçu de telle sorte que ce verrouillage du support de plaque d'immatriculation (9) est automatiquement libéré, lorsque la première pièce de support (4) et/ou la deuxième pièce de support (5) est/sont déplacée(s) de sa/leur position de réception de charge à sa/leur position de transport, **caractérisé en ce que** le dispositif de verrouillage (25) comprend une première unité de verrouillage (26) faisant saillie vers le haut depuis la deuxième pièce de support (5) et reliée de manière fixe à celle-ci, qui présente un premier élément de verrouillage (27) définissant une ouverture de verrouillage (32) ouverte en direction de l'extrémité libre de la deuxième pièce de support (5), et une deuxième unité de verrouillage (28) disposée sur le côté du support de plaque d'immatriculation (9) tourné vers la pièce de base (2), laquelle deuxième unité de verrouillage (28) définit un deuxième élément de verrouillage (29) qui est conçu à la manière d'une saillie pouvant être insérée dans l'ouverture de verrouillage (32) et pouvant être déplacé en va-et-vient entre une position de verrouillage, dans laquelle il est en engagement avec le premier élément de verrouillage (27), et une position de libération, dans laquelle il n'est pas en engagement avec le premier élément de verrouillage.

2. Porte-charge arrière (1) selon la revendication 1, **caractérisé en ce que** le mécanisme de pivotement (17) présente un élément de liaison (19), de préférence en forme d'axe, qui définit l'axe de pivotement (18) du support de plaque d'immatriculation et par lequel le support de plaque d'immatriculation (9) est relié à la première pièce de support (4).

3. Porte-charge arrière (1) selon la revendication 2, **caractérisé en ce que** l'élément de liaison (19) est fixé à un bras de fixation (20) faisant saillie vers le haut de la première pièce de support (4), relié solidement à celle-ci et prévu en particulier comme une pièce en aluminium étiré.

4. Porte-charge arrière (1) selon la revendication 3, **caractérisé en ce qu'**une butée en forme de goupille (23) fait saillie du côté du support de plaque d'immatriculation (9) tourné vers le dispositif de connexion (3) et une ouverture de réception de butée (24) est prévue latéralement sur le bras de fixation (20), la butée (23) et l'ouverture de réception de butée (24) étant positionnées et formées de telle manière que la butée (23) est insérée dans l'ouverture de réception de butée (24) lorsque le support de plaque d'immatriculation (9) est transféré de la position sensiblement horizontale à la position sensiblement verticale et butte contre une paroi de l'ouverture de réception de butée (24) lorsqu'il atteint la position sensiblement verticale.

5. Porte-charge arrière (1) selon l'une quelconque des revendications précédentes, **caractérisé en ce que** la première unité de verrouillage (26) est prévue comme une pièce en aluminium étiré.

6. Porte-charge arrière (1) selon l'une des revendications précédentes, **caractérisé en ce que** le premier élément de verrouillage (27) est en forme de crochet.

7. Porte-charge arrière (1) selon l'une des revendications précédentes, **caractérisé en ce que** le deuxième élément de verrouillage (29) est sollicité en direction de la position de verrouillage par un ressort (30).

8. Porte-charge arrière (1) selon la revendication 7, **caractérisé en ce que** le premier élément de verrouillage (27) définit une surface de guidage (34) qui est positionnée et formée de telle sorte que le deuxième élément de verrouillage (29), lorsque le support de plaque d'immatriculation (9) est transféré de la position sensiblement verticale à la position sensiblement horizontale, est guidé le long de la surface de guidage (34) dans sa position de libération et, à l'extrémité de la surface de guidage, est déplacé dans sa position de verrouillage à l'intérieur de l'ouverture de verrouillage (32) du premier élément de verrouillage (27) en raison de la prétension.

9. Porte-charge arrière (1) selon l'une quelconque des revendications précédentes, **caractérisé en ce que** des feux arrière (35) sont fixés à l'arrière des pièces de support (4, 5) et sont agencés pour faire saillie des pièces de support (4, 5) et du support de plaque d'immatriculation (9) de telle sorte que, lorsque le support de plaque d'immatriculation (9) est dans sa position sensiblement verticale et que les pièces de support (4, 5) sont dans leur position de transport, le support de plaque d'immatriculation (9) est reçu dans un espace de réception entre les feux arrière (35) et les moyens de connexion (3).

10. Porte-charge arrière (1) selon l'une des revendications précédentes, **caractérisé en ce que** les pièces de support (4, 5) sont pourvues chacune d'au moins une poignée de transport (15) dans leurs zones d'extrémité tournées vers l'extérieur, les poignées de transport (15) étant conçues et positionnées en particulier de telle sorte qu'elles puissent être saisies ensemble d'une main dans la position de transport des pièces de support (4, 5).
